Europäisches Patentamt

(19) European Patent Office

Office européen des brevets

(11) Publication number : **0 280 688**
**B1**

(12) **EUROPEAN PATENT SPECIFICATION**

(45) Date of publication of patent specification :
28.03.90

(51) Int. Cl.⁵ : **C 03 B 37/00**, **G 02 B 6/10**, **G 01 D 5/26**

(21) Application number : 87903369.4

(22) Date of filing : 21.05.87

(86) International application number :
PCT/GB 87/00353

(87) International publication number :
WO/87072 (03.12.87 Gazettee 87/27)

(54) IMPROVEMENTS IN OPTICAL FIBRES.

(30) Priority : 21.05.86 GB 8612369

(43) Date of publication of application :
07.09.88 Bulletin 88/36

(45) Publication of the grant of the patent :
28.03.90 Bulletin 90/13

(84) Designated contracting states :
AT BE CH DE FR IT LI LU NL SE

(56) References cited :
EP—A— 0 015 533
EP—A— 0 089 498
EP—A— 0 103 835
EP—A— 0 147 225
AT—B— 370 527
FR—A— 2 368 050
US—A— 3 308 394
US—A— 3 455 666
US—A— 3 973 828

(73) Proprietor : PLESSEY OVERSEAS LIMITED
Vicarage Lane
Ilford Essex IG1 4AQ (GB)

(72) Inventor : GROVES-KIRKBY, Christopher, John
19 West End Bugbrooke
Northampton NN7 3PF (GB)
Inventor : SETHI, Rajinder, Singh
68 Westone Avenue
Northampton NN3 3JQ (GB)

(74) Representative : Elliott, Frank Edward
The Plessey Company plc. Intellectual Property
Department Vicarage Lane
Ilford, Essex IG1 4AQ (GB)

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to optical fibres produced by the drawing process.

Optical fibre is conventionally fabricated by drawing down a cylindrical glass preform with compositional structure and refractive index profile magnified versions of those required in the finished fibre. The drawing technology enables long lengths of fibre of uniform, controlled, properties to be drawn from a single preform. More importantly, spatial features in the preform, e. g. compositional or refractive index variations, are reproduced accurately on a reduced scale. This approach provides a capability for microfabrication in the vitreous state, with resolution superior to that obtainable via photolithography and with freedom from other constraints generally imposed by the photofabrication processes.

The present invention is primarily concerned with the fabrication of micro-features in optical fibres via the drawing process and with the application of these features as sensing elements for biochemical and other chemical species. The aim of the invention is to present a sensed species as close as possible to the core of an optical fibre in order to perturb efficiently the propagating wave.

According to the invention, there is provided an optical fibre produced by the preform drawing process having a core surrounded by a cladding, wherein at least one of the core and the cladding includes a tubular passage positioned with respect to the core such that an optical signal in the core can be influenced by the presence of a suitable fluid material in the passage.

The optical fibre according to the invention can be used for monitoring the level of a single species known to be present and for selective monitoring, using specific reagents, of one species out of many present. This latter category can include a variety of antigen-antibody interactions and competitive binding reactions, currently of interest in the context of remote continuous sensing.

In one embodiment, the said passage may extend longitudinally through the material of said cladding. Further, the said passage may extend longitudinally through the material of said core. A medium to be sensed can enter the passage and is thus brought into contact with the core.

Alternatively the said passage may extend transversely of the said fibre and may be formed by a selective chemical etching of the fibre material, with an open side of said etched area having a closure member attached thereto.

It has been found that, with a suitable choice of etchant, silica glasses, doped for example with phosphorus, can exhibit significantly enhanced etch rates over undoped glass. Thus, by introducing selectively etchable regions into the preform prior to drawing, corresponding microscopic etchable features may be implemented in the fibre.

Additionally, the fibre may include a metal electrode contact arranged to intersect a said tubular passage.

The invention will now be further described, by way of example, with reference to the accompanying drawing, in which :

Figure 1 is a perspective view of the end of one embodiment of an optical fibre according to the invention ;

Figures 2 to 7 are similar transverse sections of different respective embodiments.

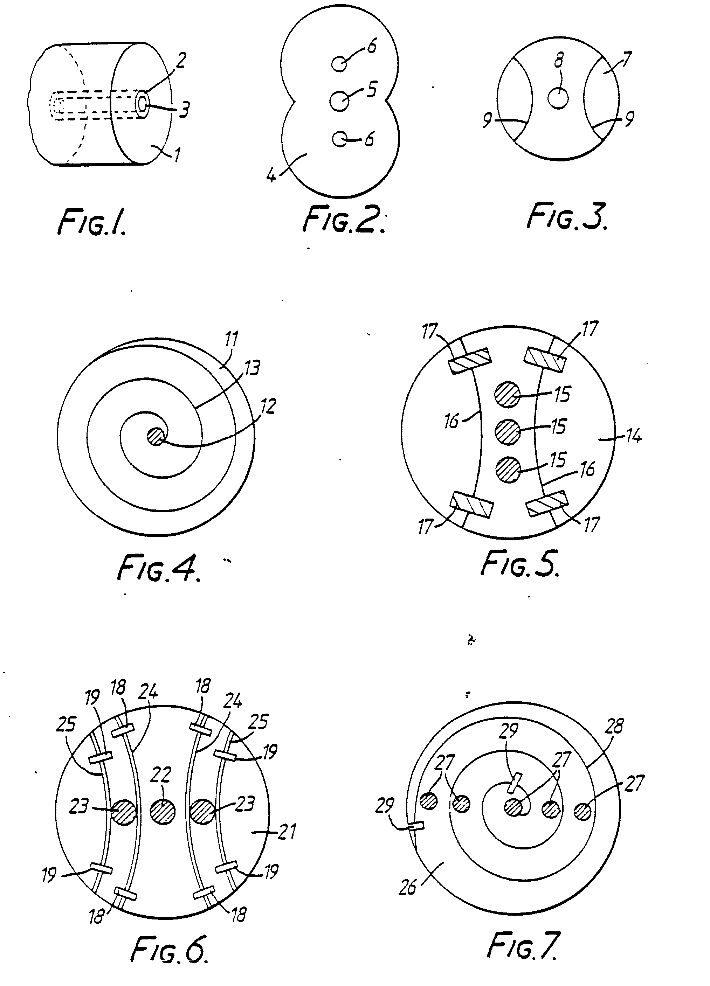

Reference will first be made to Figure 1 of the drawing in which the optical fibre comprises a guiding core 2 surrounded by a cladding 1. In this embodiment, the tubular passage takes the form of a central void 3 in the central axis of the core 2 so that the core is of annular form. The medium to be sensed can enter the void 3 and is thus brought into direct contact with the core 2.

The transverse section illustrated in Figure 2 shows that the optical fibre consists essentially of two interlocking circles of cladding material 4 with a core 5 located substantially at the centre of the cladding. A pair of tubular passages 6 extend through the cladding in the longitudinal direction thereof parallel to the core 5 and in close proximity thereto. The medium to be sensed can enter the passages 6 and is thus brought into longitudinal proximity to the core 5.

In both of the above embodiments, the passages 3 and 6 can be fabricated by providing appropriate voids in the preform prior to drawing the optical fibre. However, as previously described, it is also possible to form transverse tubular passages in optical fibres by a selective chemical etching technique. Such a fibre is illustrated in Figure 3 in which arcuate grooves 9 are formed in the cladding 7 surrounding a central core 8 of an optical fibre by selective etching. The regions of the optical fibre from which the grooves are to be formed are doped with phosphorus and introduced into the preform with undoped silica glass prior to drawing. These etchable regions are thus implanted in the fibre during drawing and the grooves 9 can be formed after drawing by chemical etching.

This process has been successfully carried out using a fibre having an external diameter of 150 micrometres, containing a phosphorus-doped annulus of 150 micrometres in diameter with a wall thickness of 0.5 micrometres. Using selective etching of a cleaved fibre face, the annular region was removed to a depth of 40 micrometres, to leave a well defined circular groove with little wall tapering. Using a silica-preferential etch, it has also been possible to fabricate an inverse structure. The etched face of the optical fibre shown in Figure 3 is butted to a plain continuation fibre or a plane reflecting surface (not shown) for sealing of the etched grooves to create the required tubular passages.

The central regions of the arcuate tubular

2

passages 9 are close to the central core 8 so that a medium entering these passages 9 can be brought into close proximity to the core. This structure can be used for continuous monitoring on a through-flow bias. In different embodiments it is also possible to provide more than two arcuate tubular passages in the cladding 7 or, alternatively, only a single tubular passage.

Since the above structures, and related structures after certain modifications, fabricated to the above concept, can in principle be manufactured in extended lengths, applications to micro-chromatographic and micro-electrophoretic separation techniques and detection will be apparent to those skilled in the art. Such a related structure for micro-chromatography applications is illustrated in Figure 4 of the drawing in which a longer, spiral, etchable region is formed in the optical fibre. The spiral region is selectively etched, as described above, to form a spiral groove 13 extending through the cladding 11 of the optical fibre from a central core 12 to the outer periphery of the cladding.

Figure 5 shows a modification of the optical fibre shown in Figure 3 in which three cores 15 are embedded in the cladding 14. Two arcuate grooves 16 are provided in the cladding, said grooves 16 being formed by selective chemical etching as above described with reference to Figure 3. In this case, however, metal electrode contacts 17 are provided in the cladding in the region of the arcuate grooves 16 so that they intersect the same.

In the embodiment shown in Figure 5, the central regions of the arcuate grooves 16 are located in close proximity to the cores 15 but they do not extend between the cores 15. Figure 6 shows an arrangement in which four arcuate grooves 24, 25 are provided in the cladding 2 of an optical fibre having a central core 22 and two further cores 23 located on either side of the central core. The central regions of the two inner arcuate grooves 24 extend between the central core 22 and a respective one of the said two further cores 23 while the central regions of the two outer arcuate grooves 25 extend in close proximity to respective ones of the cores 23 on the sides remote from the central core 22. Again, metal electrode contacts 18, 19 may be provided, the contact 18 intersecting the arcuate grooves 24 and the contacts 19 intersecting the arcuate grooves 25.

Figure 7 shows an optical fibre which is similar to the embodiment shown in Figure 4 but in which a series of five cores 27 are provided in the cladding 26. A single spiral groove 28 is formed in the cladding of the optical fibre by selective chemical etching as above described and extends from the central core, in close proximity to the other four cores in succession, to the outer periphery of the cladding. Metal electrode contacts 29 may also be provided in the cladding in this embodiment, said contacts intersecting the spiral groove 28.

The metal electrode contacts 17, 18, 19 and 29 shown in Figures 5 to 7 enable the optical fibres to be used for micro-electrophoretic separations and detections, a typical example being the electrophoretic separation of the five protein constituents (albumin, three globulins and fibrinagen) of blood plasma, all with differing refractive indices. The spiral configuration shown in Figure 7 provides a longer fractional separating column with multiple sensing. The metal electrode contacts may either be included in the glass preform or could be applied, after the structures have been etched, by standard photolithographic, metal evaporation or resist float-off techniques.

The invention is not restricted to the above-described embodiments but modifications and variations may be made without departing from the scope of the appended claims. For example, the single core versions of the optical fibres shown in Figures 1 to 4 may be provided with metal electrode contacts if desired. Further, it is not essential to provide the versions of the optical fibres shown in Figures 5 to 7 with metal electrode contacts and these contacts may be omitted from these embodiments of the invention if desired.

## Claims

1. An optical fibre produced by the preform drawing process having a core surrounded by a cladding, wherein at least one of the core and the cladding includes a tubular passage positioned with respect to the core such that an optical signal in the core can be influenced by the presence of a suitable fluid material in the passage.

2. An optical fibre according to Claim 1, in which the said passage extends longitudinally through the material of said cladding.

3. An optical fibre according to Claim 1, in which the said passage extends longitudinally through the material of said core.

4. An optical fibre according to any one of Claims 1 to 3, in which the said passage is formed during the process of drawing the optical fibre.

5. An optical fibre according to Claim 1, in which the said passage extends transversely of the said fibre.

6. An optical fibre according to Claim 5, in which the said transversely located passage is formed by a selective chemical etching of the fibre material, with an open side of said etched area having a closure member attached thereto.

7. An optical fibre according to any preceding claim, in which the fibre includes a metal electrode contact arranged to intersect a said tubular passage.

## Patentansprüche

1. Optische Faser, hergestellt mittels Vorformstreckziehverfahren, mit einem Kern, umgeben von einer Umhüllung, worin mindestens einer von Kern und Umhüllung einen röhrchenförmigen Durchgang umfasst, der derart in bezug auf den Kern angeordnet ist, dass ein optisches Signal im Kern durch die Anwesenheit von einem geeigneten flüssigen Material im Durchgang beeinflusst werden kann.

2. Optische Faser nach Anspruch 1, in welcher sich der besagte Durchgang in Längsrichtung durch das Material der besagten Umhüllung erstreckt.

3. Optische Faser nach Anspruch 1, in welcher sich der besagte Durchgang in Längsrichtung durch das Material des besagten Kerns erstreckt.

4. Optische Faser nach irgendeinem der Ansprüche 1 bis 3, in welcher der besagte Durchgang während dem Streckziehvorgang der optischen Faser gebildet wird.

5. Optische Faser nach Anspruch 1, in welcher sich der besagte Durchgang transversal zur besagten Faser erstreckt.

6. Optische Faser nach Anspruch 5, in welcher der besagte transversal angeordnete Durchgang mittels selektivem chemischen Aetzen des Fasermaterials gebildet wird, mit einer offenen Seite der besagten geätzten Fläche, umfassend ein daran angebrachtes Verschlussteil.

7. Optische Faser nach irgendeinem der vorangehenden Ansprüche, in welcher die Faser einen Metallelektrodenkontakt umfasst, der angeordnet ist, um einen besagten röhrchenförmigen Durchgang zu schneiden.

**Revendications**

1. Fibre optique produite par le procédé d'étirage d'une préforme (procédé de fibrage), cette fibre ayant un cœur entouré d'une gaine, procédé dans lequel au moins l'un des éléments, le cœur et/ou le gainage, comprend un passage tubulaire placé, par rapport au cœur, de manière qu'un signal optique passant dans le cœur puisse subir l'influence de la présence d'une matière fluide convenable dans le passage.

2. Fibre optique selon la revendication 1, dans laquelle ledit passage s'étend longitudinalement à travers la matière de ladite gaine.

3. Fibre optique selon la revendication 1, dans laquelle ledit passage s'étend longitudinalement à travers la matière dudit cœur.

4. Fibre optique selon l'une quelconque des revendications 1 à 3, dans laquelle ledit passage est formé au cours des opérations du procédé d'étirage de la fibre optique.

5. Fibre optique selon la revendication 1, dans laquelle ledit passage s'étend transversalement dans ladite fibre.

6. Fibre optique selon la revendication 5, dans laquelle ledit passage, situé transversalement, est formé par une attaque chimique sélective de la matière de la fibre, avec un côté ouvert de ladite zone attaquée ayant un élément de clôture qui lui est rattaché.

7. Fibre optique selon l'une quelconque des revendications précédentes, dans laquelle la fibre comprend un contact avec une électrode métallique, disposé de façon à couper l'un desdits passages tubulaires.

FIG.1.

FIG.2.

FIG.3.

FIG.4.

FIG.5.

FIG.6.

FIG.7.